**Europäisches Patentamt**

**European Patent Office**

**Office européen des brevets**

(19)

(11) Veröffentlichungsnummer: **0 027 220**

**A1**

(12)

# EUROPÄISCHE PATENTANMELDUNG

(21) Anmeldenummer: **80106011.2**

(22) Anmeldetag: **03.10.80**

(51) Int. Cl.³: **C 04 B 21/00**
**B 28 B 1/50**

(30) Priorität: **12.10.79 DE 2941370**

(43) Veröffentlichungstag der Anmeldung:
**22.04.81 Patentblatt 81/16**

(84) Benannte Vertragsstaaten:
**AT BE CH FR GB IT LI NL SE**

(71) Anmelder: **Schneider GmbH & Co.**
**Kölner Strasse 72**
**D-5020 Frechen 1(DE)**

(72) Erfinder: **Plück, Christian**
**Marienweg 11**
**D-5020 Frechen-Grefrath(DE)**

(72) Erfinder: **Schuster, Peter, Dipl.-Ing.**
**Kölner Strasse 92**
**D-5020 Frechen 1(DE)**

(74) Vertreter: **Patentanwälte Dr. Solf & Zapf**
**Postfach 13 02 19**
**D-5600 Wuppertal 1(DE)**

(54) **Verfahren und Vorrichtung zur Herstellung eines Leichtbauelements.**

(57) Die Erfindung betrifft ein Verfahren zur Herstellung eines Schaumkeramik-oder Blähtonleichtelements, wobei ein Haufwerk aus bläh- und/oder schaumfähigem Material in eine Form gefüllt, das Material des Haufwerks gebrannt, so daß es in der gewünschten Weise expandiert, und anschließend die Form mit dem Formkörper abgekühlt wird, wobei das Haufwerk zu einem Formkörper vor dem Brennen verdichtet wird, indem die Randbereiche stärker als der Kernbereich verdichtet sind und der durch die stärkere Verdichtung entstehende freie Raum mit einer weiteren Haufwerksschüttung ausgefüllt ist. Eine Vorrichtung zur Durchführung des Verfahrens ist gekennzeichnet durch einen Preßstempel (8) sowie seitliche Formenwände (9), wobei im Freiraum (11) zwischen den Formenwänden (9) ein als Widerlager dienender Unterstempel (10) angeordnet ist, der schmaler ist als der Freiraum (11), und wobei in den daraus resultierenden Zwischenräumen (12) ein vorzugsweise auf einem hydraulischen Medium (13) schwimmender Stahlrahmen (14) angeordnet ist.

FIG. 2

Verfahren und Vorrichtung zur Herstellung eines
Leichtbauelements

Die Erfindung betrifft ein Verfahren und eine Vorrichtung zur Herstellung eines aus Schaumkeramik oder
Blähton bestehenden Bauelements.

Aus Schaumkeramik oder Blähton bestehende Bauelemente
zählen zu den Leichtbaumaterialien. Die Erfindung betrifft die Herstellung von Blähtonleichtbauelementen
und Schaumkeramikelementen. Ein Blähtonleichtbauelement
wird hergestellt, indem ungeblähte oder geblähte Granulate in Formen gefüllt und erhitzt werden, bis eine
Versinterung der Oberflächen des geblähten Granulats
erfolgt. Das Blähtonleichtbauelement zeigt daher die
Struktur der geblähten Granulate. Im Gegensatz dazu
wird ein Schaumkeramikelement aus ungeblähten oder
geblähten Granalien oder aus einem Gemenge durch Wärmezufuhr hergestellt, wobei das Schäumen der Granalien
derart erfolgt, daß sich nach dem Brennprozeß eine mit
Poren durchsetzte Masse ergibt, die nach Abkühlung ein
schwammartig bzw. schaumartig aussehendes Produkt darstellt.
Bei der Herstellung derartiger Leichtbauelemente ist
zu beachten, daß ein in Formen gefülltes Haufwerk beim Aufheizen zunächst - wie alle keramischen Rohlinge - stark schwindet, beim Blähen oder Schäumen dagegen eine starke Expansion stattfindet. Das Schwindmaß entspricht jedoch nicht der Ausdehnung beim Blähen, so daß maßhaltige Formkörper - wenn überhaupt - nur mit erheblichem Aufwand zu erzielen sind.

Eine Möglichkeit, maßhaltige Formkörper herzustellen, besteht darin, die Granalien vorzublähen, in noch heißem, klebrigen Zustand in eine Form zu füllen und die klebrige Masse bis auf das gewünschte Maß abzupressen (DE-AS 1 181 611).

Ein anderes Verfahren nach der DE-AS 1 914 372 sieht bei der Herstellung eines Leichtbauelements vor, daß geblähte oder blähfähige Granulate etwa einheitlicher Größe in einen Formkasten eingebracht werden und dann das lose Haufwerk bis zum Erreichen eines keramischen bindefähigen Zustands der Oberfläche aller Granulate und bis zum Einsetzen des Blähvorganges erhitzt werden. Beim anschließenden Blähvorgang wird das Haufwerk unnachgiebig abgestützt, damit die Granulate sich in die freien Lückenräume ausdehnen können und zu einem Körper aus keramisch gebundenen, geblähten Granalien vereinigt werden. Die Vorrichtung zur Durchführung des bekannten Verfahrens weist einen verfahrbaren Formkasten mit massiven Seitenwänden und siebartig durchbrochenem Boden sowie einem massiven Deckel auf. Mit dem Deckel soll verhindert werden, daß das Haufwerk während des Blähvorganges eine größere Raumform einnimmt, als der Innenraum des Formkastens zur Verfügung stellt.

Die technische Beherrschbarkeit derartiger Verfahren zur Herstellung maßgenauer und formgetreuer Formkörper ist äußerst schwierig und erfordert sehr komplizierte Vorrichtungen. Außerdem muß dafür Sorge getragen werden, daß sich der expandierte Körper ohne Schwierigkeiten entformen läßt, d.h. während der Herstellung nicht an der Wandung der Form kleben bleibt oder anbackt. Dies kann man zwar mit Trennmitteln erreichen, jedoch gewährleisten Trennmittel nicht in jedem Fall die erwünschte Trennwirkung.

Da die aufgezeigten Schwierigkeiten bei der Herstellung maßgenauer und formgetreuer Leichtbauelemente fast nicht beherrschbar sind, wählt man in der Regel den Weg, Blähtonleichtbauelemente oder Schaumkeramikelemente herzustellen, indem man eine oben offene Stahl- oder Keramikform verwendet, die Wände der Form mit einem Trennmittel versieht, anschließend ein Haufwerk einfüllt, das Haufwerk erhitzt, beim Bläh- oder Schäumvorgang eine ungehinderte Ausdehnung zuläßt, nach dem Expandieren den Formkörper abkühlt, entformt und anschließend aus dem Formkörper das Leichtbauelement mit den gewünschten Abmessungen sägt oder schneidet.

Aufgabe der Erfindung ist, ein Verfahren und eine Vorrichtung aufzuzeigen, mit denen aus einem Haufwerk form- und maßgenaue Schaumkeramik- und/oder Blähtonleichtbauelemente auf einfache Weise hergestellt werden können.

Diese Aufgabe wird erfindungsgemäß durch ein Verfahren zur Herstellung eines Schaumkeramik- oder Blähtonleicht-

- 4 -

bauelements gelöst, wobei ein Haufwerk aus bläh- und/
oder schäumfähigem Material in eine Form gefüllt, das
Material des Haufwerks gebrannt wird, so daß es in der
gewünschten Weise expandiert, und anschließend die Form
mit dem Formkörper abgekühlt wird, dadurch gekennzeichnet, daß das Haufwerk vor dem Brennen verdichtet wird. Die Verdichtung erfolgt vorzugsweise
durch einen Preßvorgang.

Nach einer besonderen Ausführungsform der Erfindung
wird das Haufwerk zu einem inhomogen verdichteten
Formkörper verpreßt, wobei die Randbereiche des Formkörpers stärker verdichtet werden als der Kernbereich.
Die dadurch entstehenden freien Räume unterhalb der
Ebene der höchsten Erhebung der freien Oberfläche
des vorverdichteten Formkörpers werden dann mit
einer weiteren Haufwerksschüttung ausgefüllt. Selbstverständlich liegt es im Rahmen der Erfindung, daß
das inhomogene Pressen und Nachfüllen der Freiräume
mehrfach erfolgt. Wesentlich ist, daß sich durch die
Verdichtung und Nachfüllung so viel Material im Randbereich des Formlings befindet, daß die Schwindung
des Formlings während des Aufheizens kompensiert
werden kann und das Schäumen und/oder Blähen derart erfolgt, daß der Formkörper eine ebene Oberfläche sowie die vorgeschriebenen Maße erhält. Es
war überraschend und nicht/vorhersehbar, daß durch
die Randverdichtung und das Nachfüllen die beim Erhitzen entstehenden Schwindräume beim Expandieren
ohne weiteres ausgefüllt werden, ohne daß die gewünschte maßgetreue Endform des Elements darunter
leidet. Die Wirkung der erfindungsgemäßen Maßnahmen
ist nicht genau erklärbar. Möglicherweise wird durch
den Preßvorgang das Expandieren im verdichteten Randbereich des Formlings verzögert, so daß zunächst das nachgefüllte Haufwerk beim Blähen den Schwindraum ausfüllt und anschließend das verdichtete Material zusammen mit dem anderen Material homogen bis zur vorbestimmten Höhe in der Form bläht und/oder schäumt, wobei sich eine ebene Oberfläche und insbesondere beim Schäumen ein Körper mit sehr homogener Struktur ausbildet. Zur Herstellung quaderförmiger Körper wird vorzugsweise die freie Oberfläche des Haufwerks kalottenartig verdichtet, so daß sich zum Rand hin im Querschnitt etwa trichterförmige Aussparungen ergeben, die anschließend mit Haufwerk derart aufgefüllt werden, daß wieder eine ebene freie Oberfläche entsteht. Dabei ist es selbstverständlich auch möglich und ggf. zweckmäßig, den Rohling höher als bis zur Kalottenhöhe aufzuschütten.

Der Verdichtungsdruck und die Nachfüllmenge sind abhängig von der Art des Rohmaterials des Haufwerks, von der Form des Rohmaterials (Granalien, Granulate oder Rohmehl),vom Schwindmaß und vom Expansionsgrad sowie von der Aufheizgeschwindigkeit und vielen anderen Faktoren, so daß der Preßdruck und die Nachfüllmenge empirisch ermittelt werden müssen.

Besonders vorteilhaft lassen sich jedoch nach dem erfindungsgemäßen Verfahren Schaumkeramikelemente herstellen, die in der DE-AS 26 04 793 und DE-OS 27 24 010 beschrieben werden. Dabei werden im Gemisch mit einem Schäumhilfsmittel aus einem Sulfat und einem Sulfid nicht blähfähige, tonmineralhaltige Rohstoffe, vorzugsweise ein üblicher Steinzeugton, ggf. im Gemisch mit üblichen Flußmitteln mit Wasser gemengt, das Gemenge granuliert, das Granulat ggf. getrocknet und als

- 6 -

Haufwerk in Formen eingebracht. Das Haufwerk wird dann nach dem erfindungsgemäßen Verfahren verdichtet und die entstandenen Freiräume mit Haufwerksgut nachgefüllt. Anschließend wird der Formling bis zum Schäumen erhitzt und abgekühlt, wobei als Schäumhilfsmittel vorzugsweise ein Gemenge aus Eisensulfat und Eisensulfid gewählt und/oder Klärschlammasche dem Gemenge zugesetzt wird.

Für das erfindungsgemäße Verfahren eignet sich insbesondere ein Kornband der Granulate von 0,3 bis 3,0 mm bei einem Feuchtigkeitsgehalt von 8 bis 10 Gew.-% Wasser. Diese Granulate sind besonders gut trockenpreßfähig.

Da mit dem erfindungsgemäßen Verfahren ein Formkörper homogener Struktur herstellbar ist, eignet sich das Verfahren insbesondere auch zur Herstellung der Schaumkeramikelemente mit Mikrorissen, wie sie in der bereits genannten DE-OS 27 24 010 beschrieben werden.

Nach einer weiteren Ausführungsform der Erfindung wird der mit Nachfüllmaterial aufgeschüttete Formling nachverdichtet. Dabei ist besonders vorteilhaft, wenn die Vorverdichtung zur Kalottenform unter einem Preßdruck erfolgt, der etwa 1/10 des Preßdrucks der Nachverdichtung beträgt. Beispielsweise wird das Haufwerk zur Kalottenform mit einem Kalottenradius von 1500 mm vorverdichtet, anschließend die freigepreßten Räume mit dem gleichen Haufwerksmaterial nachgefüllt, worauf die Nachverdichtung mit etwa 250 bar erfolgt. Ein derart behandelter Rohling ergibt nach dem Schäumen oder Blähen ein maß- und formgetreues Schaumkeramik- oder Blähtonleichtbauelement.

Eine andere Ausführungsform der Erfindung sieht vor, daß der Rohling vorverdichtet und nachverdichtet wird, wobei er während des Nachverdichtens in eine trockengepreßte Brennform aus keramischem Material gepreßt und dabei an den Wänden und dem Boden der Form verankert wird. Mit diesem Verfahren entsteht ein Rohling, der einen sehr innigen Kontakt mit der Brennform aus keramischem Material aufweist. Der Verbund kann dann ohne weiteres gehandhabt und z. B. ohne weitere Brennhilfsmittel einem keramischen Brand unterworfen werden. Für die Brennform wird eine keramische trockengepreßte Form gewählt, die die gleiche oder etwa die gleiche Schwindung wie der verdichtete Rohling aufweist, so daß beim Erhitzen keine Schwindräume zwischen dem Rohling und der Brennform auftreten. Die Brennform besteht daher zweckmäßigerweise aus einem Material, das die gleiche oder etwa die gleiche Schwindung wie das Haufwerk aufweist. Die Einstellung gleicher oder etwa gleicher Schwindwerte erreicht man vorzugsweise, indem man zur Herstellung der Brennform grundsätzlich das gleiche Material verwendet, aus dem auch das Haufwerk besteht. Lediglich das Bläh- oder Schäumhilfsmittel sollte im Material für die Brennform in geringeren Mengen vorhanden sein oder vollständig fehlen. Das Formmaterial wird vorzugsweise als Granulat, insbesondere mit einem Kornband von 0,3 bis 3,0 mm, verwendet; es kann aber auch in Form eines Rohmehls verwendet werden. Das Formmaterial weist zweckmäßigerweise eine Preßfeuchte von 8 bis 10 Gew.-% auf, so daß es sich leicht trockenpressen läßt.

Nach einer besonderen Ausführungsform dieses Verfahrens wird während des Nachverdichtens des Rohlings gleichzeitig in einem Arbeitsgang die Brennform geformt und der Rohling in die Brennform gepreßt. Diese bevorzugte Verfahrensvariante wird zweckmäßigerweise mit einer Preßvorrichtung durchgeführt, in deren Aufnahme das Haufwerk des Rohlings gegeben, anschließend der Rohling vorverdichtet, dann die Aufnahme erweitert wird, so daß um den vorverdichteten Rohling herum die Form der Brennform als Hohlraum gebildet wird. Daraufhin wird dieser Hohlraum für die Brennform mit dem Formmaterial ausgefüllt und dann die Nachverdichtung des Rohlings bzw. die Verdichtung des Brennformkörpers durchgeführt, wobei der Rohling in die Brennform gepreßt und dort verankert wird. Anschließend wird die Brennform mit dem verdichteten Rohling der Preßvorrichtung entnommen und der Verbund gebrannt sowie abgekühlt, wobei der Rohling expandiert und ein ebenes Leichtbauelement mit vorbestimmten Abmessungen bildet. Die trockengepreßte Brennform aus keramischem Material sorgt im Zusammenwirken mit dem ebenfalls trockengepreßten, relativ hochverdichteten Rohling für die Vorherbestimmbarkeit der Abmessungen und für die Ausbildung einer homogenen Struktur des Leichtbauelements. Beim Vorverdichten des Haufwerks wird ein Preßdruck gewählt, der ausreicht, um einen Rohling zu schaffen, der standfest ist und ohne zusammenzufallen erlaubt, daß er mit dem Material für die Brennform umgeben bzw. ummantelt wird. Der Preßdruck für die Vorverdichtung liegt für ein schäumbares Granulat mit einem Kornband von 0,3 bis 3,0 mm, das zur Herstellung eines Schaumkeramikelements nach der DE-AS 26 04 793 und DE-OS 27 24 010 verwendet wird, bei etwa 25 bar, wenn für die Nachverdichtung ein Druck von etwa 250 bar gewählt wird. Nach dem Nachverdichten soll der Körper aus Brennform und Rohling eine Verdichtung aufweisen, die die Maßgenauigkeit und homogene Struktur des Leichtbauelementes gewährleistet.

Das erfindungsgemäße Verfahren mit trockengepreßter Brennform eignet sich insbesondere zur Herstellung eines Leichtbauelements mit Schutzschicht. Als Schutzschicht dient in diesem Fall der Boden der Brennform, wenn die Seitenwände der Form nach dem Abkühlen beispielsweise durch Sägen vom Leichtbauelement entfernt werden. Ein solches Sandwich-Leichtbauelement wird insbesondere als Fußbodenplatte verwendet, weil die Schutzschicht besonders widerstandsfähig gegen Schlag, Stoß und Abrieb ausgeführt werden kann. Zu diesem Zweck wird für die Brennform vornehmlich ein Gemenge verwendet, das mineralogisch die gleiche Zusammensetzung aufweist wie das zu schäumende Produkt, wobei jedoch die Schäumhilfsmittel stark reduziert worden sind. Beispielsweise wird für die Brennform ein Granulat mit einem Kornband von 0,3 bis 3,0 mm aus einem Gemenge aus etwa 25 Gew.-% Tonerde, etwa 25 Gew.-% Klärschlammasche und etwa 50 Gew.-% Ton verwendet, wobei der Ton ein quarzreicher Steinzeugton sein sollte. Eine Brennform aus diesem Material, das mit etwa 250 bar verdichtet wird, in der der ebenfalls mit etwa 250 bar verdichtete Rohling verankert ist, ist sehr standfest, stapelbar und sorgt für ein homogenes Expandieren, insbesondere Schäumen, des Rohlings, ohne daß die Schwindung der keramischen Stoffe einen unkontrollierbaren Einfluß auf die Abmessungen des geschäumten oder geblähten Leichtbauelements nehmen kann.

Aus der DE-OS 25 11 869 und DE-OS 25 12 597 ist ein Verfahren zur Herstellung eines aus Schaumkeramik bestehenden Baukörpers bekannt, der wenigstens einseitig mit normaler Keramik oder mit einem Keramikmaterial geringerer Porosität beschichtet ist. Dabei wird u.a. eine untere trogförmige Deckschicht aus einer keramischen Masse mit Stegen aus schäumbarer keramischer Masse besetzt und der Trog mit einer Deckschicht aus einer keramischen Masse abgedeckt. Bei der Führung des Formlings durch den Ofen soll die keramische Masse der Stege in die freien, zwischen den Stegen verbliebenen Räume schäumen, so daß diese Räume, wenn das Produkt den Ofen verläßt, mit schaumiger Keramikmasse vollgeschäumt sind. Der Deckel wird mit dem Trog verbunden und soll dadurch ein Überschäumen verhindern, so daß die äußere Form des Troges mit Deckel die Abmessungen des Endprodukts ergibt. Das bekannte Verfahren arbeitet somit mit keramischen Massen, d.h. mit bildsamen, stranggepreßten Massen. Eine Maßhaltigkeit des Leichtbauelements, wie sie erfindungsgemäß angestrebt wird, kann mit bildsamen Massen nicht in allen Fällen erzielt werden.

Anhand der Zeichnung wird die Erfindung beispielhaft näher erläutert. Es zeigen:

Fig. 1 schematisch einen Rohling mit kalottenförmiger Vorverdichtungszone und Nachfüllmaterial in einer Brennform,

Fig. 2 schematisch eine Vorrichtung zur Herstellung des Verbundkörpers,

Fig. 3 schematisch die Vorrichtung nach Fig. 2, in der der verdichtete Verbundkörper sitzt.

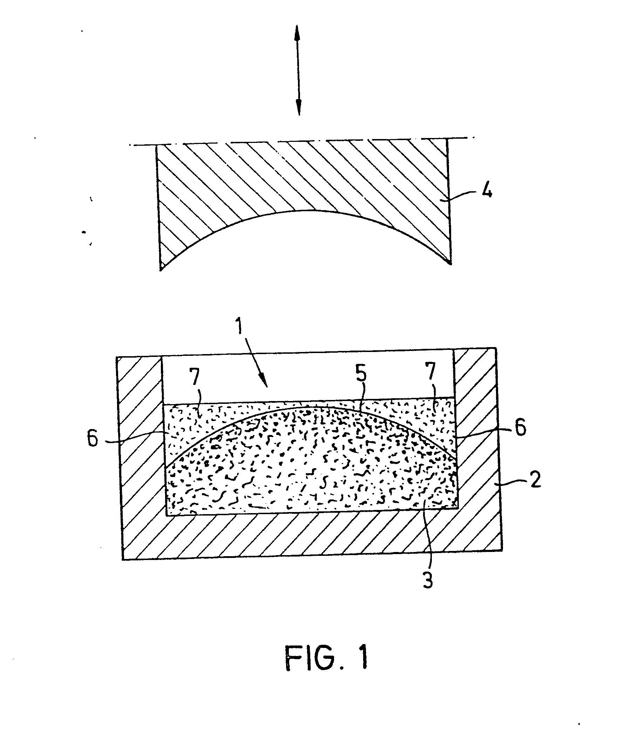

Der Rohling 1 gemäß Fig. 1 wird von einer Form 2 aufgenommen. Er zeigt eine vorverdichtete Zone 3, die Kalottenform aufweist, wobei die Kalottenform vom entsprechend geformten, in Pfeilrichtung arbeitenden Preßstempel 4 geprägt worden ist und die im Querschnitt bogenförmige Oberflächengestaltung 5 aufweist. Die durch die Vorverdichtung entstandenen Freiräume 6 sind mit losem Haufwerk 7 aufgefüllt worden. Im Rahmen der Erfindung können mehrere Vorverdichtungen und Nachfüllungen sowie eine Nachverdichtung vorgesehen sein, wobei bei der Nachverdichtung ein ebener Preßstempel verwendet wird, so daß eine ebene Oberfläche des Rohlings entsteht.

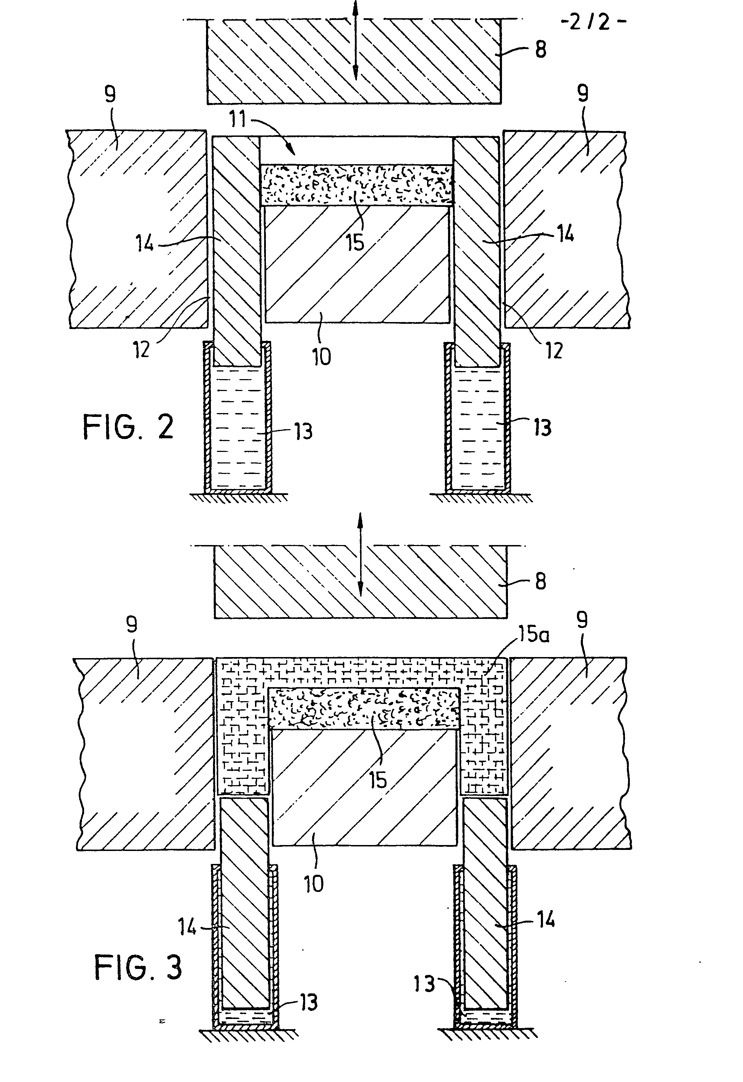

Fig. 2 und 3 zeigen eine Preßvorrichtung, bestehend aus einem in Pfeilrichtung arbeitenden Preßstempel 8, sowie seitlichen Formenwänden 9, von denen nur zwei abgebildet sind. In der Aufnahme 11 zwischen den Formenwänden 9 ist ein Widerlager 10 angeordnet, das schmaler ist als der Innenraum der Aufnahme 11. Daraus resultieren Zwischenräume 12, in denen ein vorzugsweise in einem hydraulischen Medium 13 bzw. System schwimmender Stahlrahmen 14 angeordnet ist, dessen Preßfläche über das Medium hinausragt und zusammen mit dem Medium wie ein Preßstempel arbeitet. Ein Ausgleichsventil im hydraulischen System sorgt für den gewünschten Gegendruck. Der Stahlrahmen 14 kann mit geeigneten Mitteln (nicht dargestellt) nach unten verfahren und in der gewünschten Stellung festgesetzt werden.

Die Wände des Stahlrahmens 14 bilden die Seitenwände der Formenaufnahme 11 bei der Herstellung des vorverdichteten Rohlings 15 (Fig. 1).

Wie in den Fig. 2 und 3 angedeutet, wird in der erfindungsgemäßen Vorrichtung eine Brennform mit integriertem Rohling gepreßt. Dabei wird zunächst ein Haufwerk aus expandierfähigem Material in den Formenraum 11 geschüttet, wobei der Rahmen 14 in seiner obersten Stellung angeordnet ist. Dann wird mit dem Preßstempel 8 das Haufwerk vorverdichtet, so daß der Rohling 15 entsteht. Beim Vorverdichten wird der schwimmende Rahmen 14 gegen den Druck des Mediums 13 nach unten mitgenommen. Anschließend fährt der Preßstempel 8 wieder nach oben, wobei der Rahmen 14 stehen bleibt. Dann wird der Rahmen 14 nach unten verfahren und festgesetzt (Fig. 2). In den dadurch entstehenden, im Querschnitt U-förmigen Aufnahmeraum wird dann das Haufwerk für die Brennform eingefüllt, worauf die Nachverdichtung erfolgt, indem der Preßstempel 8 mit der vorbestimmten Preßkraft aufgepreßt wird. Anschließend wird nach dem Zurückfahren des Preßstempels die Brennform 15a mit integriertem Rohling dem Formenraum entnommen und das Verbundelement gebrannt. Zum Ausstoßen des Verbundelements aus dem Formenraum kann vorzugsweise der nach oben fahrende Rahmen 14 benutzt werden.

Mit der Erfindung gelingt es somit, mit einfachen Mitteln das Schwindproblem bei der Herstellung keramisch gebundener Leichtbauelemente zu lösen.

Ansprüche:

1. Verfahren zur Herstellung eines Schaumkeramik- oder Blähtonleichtbauelements, wobei ein Haufwerk aus bläh- und/oder schäumfähigem Material in eine Form gefüllt, das Material des Haufwerks gebrannt, so daß es in der gewünschten Weise expandiert, und anschließend die Form mit dem Formkörper abgekühlt wird, d a d u r c h  g e k e n n z e i c h - n e t, daß das Haufwerk vor dem Brennen verdichtet wird.

2. Verfahren nach Anspruch 1, d a d u r c h  g e - k e n n z e i c h n e t, daß der Formkörper zur Verdichtung gepreßt wird.

3. Verfahren nach Anspruch 1 und/oder 2, d a d u r c h  g e k e n n z e i c h n e t, daß der Formkörper in-homogen verdichtet wird, wobei die Randbereiche des Formkörpers stärker als der Kernbereich verdichtet werden, und daß der durch die stärkere Verdichtung entstehende freie Raum mit einer weiteren Haufwerksschüttung ausgefüllt wird.

4. Verfahren nach einem oder mehreren der Ansprüche 1 bis 3, d a d u r c h  g e k e n n z e i c h n e t,

daß zur Herstellung quaderförmiger Körper die freie Oberfläche des Haufwerks kalottenartig verdichtet wird, wobei zum Rand hin im Querschnitt etwa trichterförmige Aussparungen entstehen, die mit Haufwerk so weit aufgefüllt werden, bis eine ebene freie Oberfläche hergestellt ist.

5. Verfahren nach einem oder mehreren der Ansprüche 1 bis 4, d a d u r c h   g e k e n n z e i c h - n e t, daß Granulate mit einem Kornband von 0,3 bis 3,0 mm bei einem Feuchtigkeitsgehalt von 8 bis 10 Gew.-% Wasser verwendet werden und die Verdichtung des Haufwerks durch Trockenpressung erfolgt.

6. Verfahren nach einem oder mehreren der Ansprüche 1 bis 5, d a d u r c h   g e k e n n z e i c h n e t, daß der mit Nachfüllmaterial aufgeschüttete Formling nachverdichtet wird.

7. Verfahren nach Anspruch 6, d a d u r c h   g e - k e n n z e i c h n e t, daß die Vorverdichtung mit einem Zehntel des Preßdrucks der Nachverdichtung erfolgt.

8. Verfahren nach Anspruch 6 und/oder 7, d a d u r c h   g e k e n n z e i c h n e t, daß das Haufwerk zur Kalottenform mit einem Kalottenradius von 1500 mm vorverdichtet, anschließend die freigepreßten Räume mit dem gleichen Haufwerksmaterial nachgefüllt und dann die Nachverdichtung mit etwa 250 bar durchgeführt wird.

9. Verfahren nach einem oder mehreren der Ansprüche 6 bis 8, d a d u r c h   g e k e n n z e i c h n e t, daß der Formling vorverdichtet und nachverdichtet wird, wobei er während des Nachverdichtens in eine trockengepreßte keramische Brennform gepreßt wird.

10. Verfahren nach Anspruch 9, d a d u r c h   g e - k e n n z e i c h n e t, daß für die Brennform eine keramisch trockengepreßte Form verwendet wird, die die gleiche oder etwa die gleiche Schwindung wie der verdichtete Rohling aufweist.

11. Verfahren nach Anspruch 9 und/oder 10, d a d u r c h   g e k e n n z e i c h n e t, daß eine Brennform verwendet wird, die aus dem Haufwerksmaterial besteht, wobei lediglich das Bläh- oder Schäumhilfsmittel fehlt oder nur noch in geringen, vorzugsweise unwirksamen, Mengen vorhanden ist.

12. Verfahren nach einem oder mehreren der Ansprüche 9 bis 11, d a d u r c h   g e k e n n z e i c h n e t, daß für die Brennform ein Granulat mit einem Kornband von 0,3 bis 3,0 mm verwendet wird, das eine Preßfeuchte von 8 bis 10 Gew.-% aufweist.

13. Verfahren nach einem oder mehreren der Ansprüche 9 bis 12, d a d u r c h   g e k e n n z e i c h n e t, daß während des Nachverdichtens des Rohlings gleichzeitig in einem Arbeitsgang die Brennform geformt und der Rohling in die Brennform gepreßt wird.

14. Verfahren nach einem oder mehreren der Ansprüche 9 bis 13, d a d u r c h   g e k e n n z e i c h n e t, daß nach dem Abkühlen lediglich die Seitenwände der Brennform abgesägt werden, so daß der Boden der Brennform als Schutzschicht auf dem Leichtbauelement verbleibt.

15. Verfahren nach einem oder mehreren der Ansprüche 9
bis 14, d a d u r c h   g e k e n n z e i c h n e t,
daß für die Brennform ein Gemenge aus etwa 25 Gew.-%
Tonerde, 25 Gew.-% Klärschlammasche und 50 Gew.-%
Steinzeugton verwendet wird.

16. Vorrichtung zur Durchführung des Verfahrens nach
Anspruch 9 bis 15, g e k e n n z e i c h n e t
d u r c h   einen Preßstempel (8) sowie seitlichen
Formenwänden (9), wobei im Freiraum (11) zwischen
den Formenwänden (9) ein als Widerlager dienender
Unterstempel (10) angeordnet ist, der schmaler
ist als der Freiraum (11), und wobei in den daraus
resultierenden Zwischenräumen (12) ein vorzugsweise
auf einem hydraulischen Medium (13) schwimmender
Stahlrahmen (14) angeordnet ist.

17. Vorrichtung nach Anspruch 16, d a d u r c h   g e -
k e n n z e i c h n e t, daß der Stahlrahmen (14)
nach unten verfahrbar und arretierbar angeordnet
ist.

FIG. 1

FIG. 2

FIG. 3

**0027220**

Europäisches Patentamt

# EUROPÄISCHER RECHERCHENBERICHT

Nummer der Anmeldung

EP 80 10 6011.2

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 1 796 014 (GRÜNZWEIG & HARTMANN) <br> * Ansprüche 1, 2, 5 * <br> -- | 1,2,5 | C 04 B 21/00 <br> B 28 B 1/50 |
| A | DE - B2 - 2 248 304 (SEKISUI KAGAKU KOGYO K.K.) <br> * Anspruch 1 * <br> -- | 1 | |
| A | DE - B2 - 2 119 117 (O. SATO) <br> * Spalte 7, Zeilen 57 bis 66 * <br> -- | 1 | |
| A | CA- A - 986 288 (CLAYBURN INDUSTRIES) <br> * Anspruch 8 * <br> -- | 1 | **RECHERCHIERTE SACHGEBIETE (Int. Cl.³)** |
| D | DE - B - 1 914 372 (W. DOLLE et al.) <br> ---- | | B 28 B 1/50 <br> C 04 B 15/00 <br> C 04 B 21/00 <br> C 04 B 43/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Berlin | 12-12-1980 | HÖRNER |

EPA form 1503.1 06.78